(19) Europäisches Patentamt
European Patent Office
Office européen des brevets

(11) **EP 4 653 076 A1**

(12) **EUROPEAN PATENT APPLICATION**

(43) Date of publication:
**26.11.2025 Bulletin 2025/48**

(21) Application number: 24177670.7

(22) Date of filing: **23.05.2024**

(51) International Patent Classification (IPC):
**B01D 61/14** (2006.01)   **B01D 61/18** (2006.01)

(52) Cooperative Patent Classification (CPC):
**B01D 61/147; B01D 61/149; B01D 61/18;**
B01D 71/12; B01D 71/68; B01D 2325/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sartorius Stedim Biotech GmbH 37079 Göttingen (DE)**

(72) Inventors:
• **Stegelmeier, Corinna 37079 Göttingen (DE)**
• **Metze, Michael 37079 Göttingen (DE)**
• **Thom, Volkmar 37079 Göttingen (DE)**

(74) Representative: **Müller-Boré & Partner Patentanwälte PartG mbB Friedenheimer Brücke 21 80639 München (DE)**

(54) **FILTRATION SYSTEM AND METHOD FOR STERILE FILTRATION OF PARTICLES HAVING A HYDRODYNAMIC DIAMETER OF AT MOST 400 NM**

(57) The present invention relates to a filtration system for sterile filtration of particles having a hydrodynamic diameter of at most 400 nm as well as a method for sterile filtration of particles having a hydrodynamic diameter of at most 400 nm, both of which achieve a high yield of target molecules and sterility.

Figure 1

EP 4 653 076 A1

**Description**

The present invention relates to a filtration system for sterile filtration of particles having a hydrodynamic diameter of at most 400 nm as well as a method for sterile filtration of particles having a hydrodynamic diameter of at most 400 nm, both of which achieve a high yield of target molecules and sterility.

Sterile filtration of large particles, i.e., particles having a hydrodynamic diameter of up to 400 nm, is of high importance in various purification protocols. For example, in cell and gene therapy, suspensions of such large particles have to be filtered in order to remove contaminants to satisfy sterility requirements. Usually, such large particles to be purified are biomolecules, e.g., viruses, virus-like particles, liposomes, exosomes, and lipid nanoparticles.

In this context, the terms "sterile" and "nonsterile" as used herein relate to the capability of a filtration system to hold back bacteria (e.g., the model bacterium *Brevundimonas diminuta*), i.e., "sterile filtrations" hold back bacteria while "nonsterile filtrations" let a significant (unwanted) portion of bacteria pass. Sterility is commonly assessed using the logarithmic reduction value (LRV) in a standard bacterial challenge test such as ASTM F838-20, the LRV being defined as the quotient of the logarithm of the total number "$n_{feed}$" of bacteria (here: *B diminuta* cells) in a process solution ("feed solution") before passage through a filter and the sum (1+ nitrate), wherein "$n_{filtrate}$" is the total number of bacterial colonies grown on a culture medium:

$$LRV = \frac{\log_{10}(n_{feed})}{1 + n_{filtrate}}$$

In this context, a process/feed solution is used in which the number of bacteria is set to $1 \times 10^7$ per square centimeter of the surface of the filtration system.

As used herein, an LRV of less than 7.0 refers to a nonsterile filtration, i.e., a significant portion of bacteria is able to pass through the filtration system, and an LRV of at least 7.0 refers to a sterile filtration, i.e., the bacteria can be held back and removed.

However, the central problem of sterile filtration (purification) of large particles is that when using the commercially available sterile filtration systems having e.g., a nominal pore diameter of 0.2 and 0.22 $\mu$m, the mean pore diameter of the filtration system is in the same size dimension as the diameter of the large particles to be filtered/purified. That is, besides holding back contaminants such as bacteria (i.e., sterile filtering) also the target molecules are held back, since both particles may be in the same size range (e.g., from 100 to 500 nm). Therefore, the yield of such a process decreases strongly (cf. e.g., Taylor, N. et al. J. Membr. Sci. 2021, 635, 119436) and applicants are forced to use aseptic filtration methods.

Accordingly, in view of the above, the technical problem underlying the present invention is to provide a filtration system for sterile filtration of particles having a hydrodynamic diameter of at most 400 nm as well as a method for sterile filtration of particles having a hydrodynamic diameter of at most 400 nm, the filtration system and method both being capable of filtering/purifying large particles as target molecules with a high yield (e.g., a transmission of the target molecules of preferably at least 50% of the feed) while also achieving a high degree of sterility, i.e., an LRV of at least 7.0.

The solution to the above technical problems is provided by the embodiments characterized in the claims.

Accordingly, the present invention provides a filtration system for sterile filtration of particles having a hydrodynamic diameter of at most 400 nm,

the system comprising one or more sequentially arranged separation membrane layers each comprising a porous separation membrane;
wherein each of the porous separation membranes of the one or more separation membrane layers has a mean flow pore diameter MFP,
wherein the MFP of each of the porous separation membranes is at least 0.45 $\mu$m,
wherein the MFP of the porous separation membrane having the lowest MFP is defined as $MFP_{min}$,
wherein the MFP of each of the porous separation membranes other than the porous separation membrane having $MFP_{min}$ is at most 20% larger than $MFP_{min}$,
wherein the total height $h_{tot}$ of the one or more sequentially arranged separation membrane layers is characterized by the following formula (1):

$$h_{max} \geq h_{tot} \geq h_0 + A_1 * e^{t_1 * (MFP_{min})^2} \qquad (1)$$

wherein $h_{max}$ is 1.5 mm, $h_0$ is 32 $\mu$m, $A_1$ is 12 $\mu$m, and $t_1$ is 7.5 $\mu$m$^{-2}$; and
wherein the normalized permeability $P_{norm}$ of the one or more sequentially arranged separation membrane layers is less than a maximum normalized permeability $P_{calc}$ calculated by the following formula (2):

$$P_{calc} = P_0 + A_2 * MFP_{min} \qquad (2)$$

wherein $P_0$ is -0.079 mD and $A_2$ is 0.415 mD/$\mu$m.

The filtration system of the present invention is capable of sterile filtration (and thus purification) of particles having a hydrodynamic diameter of at most 400 nm as target particles/molecules.

In this context, the term "particles having a hydrodynamic diameter of at most 400 nm" is not particularly limited. However, considering the above-described limitations of sterile filtration, the particles preferably have a hydrodynamic diameter of at least 25 nm, more preferably of at least 50 nm, even more preferably of at least 75 nm, still more preferably of at least 100 nm, more preferably of at least 150 nm, and most preferably of at least 190 nm. That is, for particles having a hydrodynamic diameter of at least 100 nm, sterile filtration has only been possible accepting a large decrease in yield (i.e., a transmission of less than 50%) using common sterile filters having pore sizes of about 0.2 $\mu$m.

Here, "hydrodynamic diameter" refers to the diameter of a particle in water, which is typically determined using dynamic light scattering (DLS), for example, using a Zetasizer Nano Series (Malvern). In this context, the method DLS is well known to a skilled person in the field of colloidal suspensions of particles.

Further, the filtration system of the present invention comprises one or more sequentially arranged separation membrane layers each comprising a porous separation membrane. In this context, the term "sequentially arranged" relates to consecutive arrangements of membrane layers (e.g. in the direction of flow of the fluid to be filtered). Moreover, the term "porous separation membrane" relates to a selective barrier separating two phases. For fulfilling its purpose of being selective, the separation membranes are provided with pores passing from one side to the other side. Generally, such membranes can have various functions, such as size exclusion of specific substances, unspecific binding of e.g., hydrophobic substances, or specific binding of substances bearing a corresponding reactive group. In the context of the present invention, a separation membrane refers to a size exclusion membrane. That is, size exclusion membranes employ their pore size to hold back particles of specific sizes, i.e., to separate particle suspensions based on particle size, and are usually not chemically modified, i.e., they are intended to avoid any binding (specific and unspecific) to or interaction with target molecules. In contrast, membranes intended to bind target molecules are chemically modified and provide (specific or unspecific) binding sites. That is, in a preferred embodiment of the filtration system of the present invention, the one or more sequentially arranged separation membrane layers have a protein binding capacity of bovine serum albumine (BSA) per volume unit of the filtration system of 3.0 mg/mL or less at a pH of 3 to 10. More preferably, the protein binding capacity of BSA is 2.0 mg/mL or less and even more preferably 1.0 mg/mL or less at a pH of 3 to 10. In this context, the protein binding capacity of BSA can be determined by the following method:

The samples are installed in a suitable membrane holder and undergo four treatment steps at a flow rate of 5 mL/min: They are first rinsed 4 minutes with a 20 mmol/L TRIS/HCl buffer in deionized water (DI water) at pH 7.2, then loaded for 2 minutes with a 0.2% BSA solution in 20 mmol/L TRIS/HCl buffer in DI water at pH 7, rinsed again for 2 minutes with the TRIS/HCl buffer, and finally eluted for 2 minutes with a 1 mol/L NaCl solution in 20 mmol/L TRIS/HCl buffer in DI water at pH 7.2. The eluate is collected in a test tube.

The BSA concentration in the eluate is measured photometrically at a wavelength of 280 nm compared to a reference solution of 0.2% BSA in 20 mmol/L TRIS/HCl buffer in DI water at pH 7.2.

In the filtration system of the present invention, each of the porous separation membranes of the one or more separation membrane layers has a mean flow pore diameter (MFP), wherein the MFP of each of the porous separation membranes is at least 0.45 $\mu$m. In particular, in order to ensure a high degree of sterility, the MFP of each of the porous separation membranes is preferably at most 1.0 $\mu$m, more preferably at most 0.9 $\mu$m, and most preferably at most 0.8 $\mu$m. However, in order to achieve a high yield of the target molecules as well as a high flowrate and throughput, the MFP of each of the porous separation membranes is at least 0.45 $\mu$m, preferably at least 0.50 $\mu$m, more preferably at least 0.55 $\mu$m, even more preferably at least 0.60 $\mu$m, and most preferably at least 0.65 $\mu$m.

In the present invention, the MFP of each of the porous separation membranes may be different from each other or may be the same in two or more porous separation membranes or in each porous separation membrane.

Here, the MFP may be determined by capillary flow porometry as described e.g., in EP 4 299 165 A1. Capillary flow porometry is a gas-liquid porosimetry technique in which the differential gas pressures and flow rates through a membrane sample are measured first in the wet state and then in the dry state. Before the measurement, the membrane sample is contacted with a wetting liquid such that all pores present are filled with said wetting liquid. Once the pores are filled, the membrane sample is introduced into the measurement cell. After closing the measurement cell and starting the measurement, the gas pressure is increased for example in an automatic and stepwise manner, and the pore diameters in accordance with the pressure being applied are emptied as a result of the gas pressure. This is done until all the relevant pore sizes have been captured, i.e. until even the smallest pores present in the measurement range have been cleared of the liquid. Thereafter, the pressure is dropped back down, and the measurement is automatically repeated on the now dry membrane sample. From the difference between the two pressure/flow rate curves, the pore size distribution is calculated via the Young-Laplace equation (see also A. Shrestha, "Characterization of porous membranes via porometry", 2012, Mechanical Engineering Graduate Theses & Dissertations, Paper 38, University of Colorado at Boulder).

Moreover, in the filtration system of the present invention, the MFP of the porous separation membrane having the lowest MFP is defined as $MFP_{min}$. The MFP of each of the porous separation membranes other than the porous separation membrane having $MFP_{min}$ is at most 20% larger than $MFP_{min}$. Preferably, the MFP of each of the porous separation membranes other than the porous separation membrane having $MFP_{min}$ is at most 15% larger than $MFP_{min}$ and more preferably at most 10% larger than $MFP_{min}$. The above maximal variation of the MFP of each of the porous separation membranes other than the porous separation membrane having $MFP_{min}$ of at most 20% describes all separation membrane layers which contribute to the separation of the target molecules. That is, optional membrane layers which have an MFP being more than 20% larger than $MFP_{min}$ do not contribute to the separation by size and, thus, are not part of the total height $h_{tot}$ of the one or more sequentially arranged separation membrane layers described below.

In this context, the porous separation membranes are not so-called "pre- and main filters". That is, a typical variation of the MFP between the pre- and the main filter in such a system is at least 30% (i.e., the MFP of the porous separation membranes other than the porous separation membrane having $MFP_{min}$ is at least 30% larger than $MFP_{min}$).

Further, in the filtration system of the present invention, the total height $h_{tot}$ of the one or more sequentially arranged separation membrane layers is characterized by the following formula (1):

$$h_{max} \geq h_{tot} \geq h_0 + A_1 * e^{t_1*(MFP_{min})^2} \qquad (1)$$

wherein $h_{max}$ is 1.5 mm, $h_0$ is 32 $\mu$m, $A_1$ is 12 $\mu$m, and $t_1$ is 7.5 $\mu$m$^{-2}$.

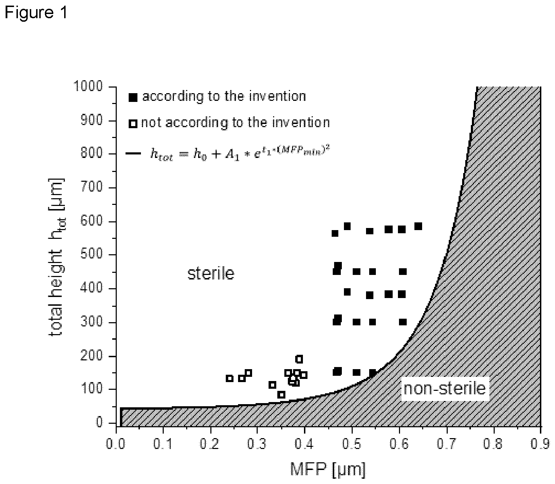

The above relationship between the height and $MFP_{min}$ describes the thickness of the sequentially arranged separation membrane layers in dependence of the lowest MFP of the layers in order to achieve sterile filtration. Said relationship is also shown in Figure 1 graphically.

In view of the above, and in order to achieve a high flowrate during a filtering process, $h_{max}$ is preferably 1.0 mm and more preferably 0.75 mm.

In a preferred embodiment, in formula (1), $h_0$ is 45 $\mu$m, $A_1$ is 14 $\mu$m, and $t_1$ is 8.0 $\mu$m$^{-2}$. In a particularly preferred embodiment, in formula (1), $h_0$ is 55 $\mu$m, $A_1$ is 16 $\mu$m, and $t_1$ is 8.5 $\mu$m$^{-2}$.

Further, the height of the one or more sequentially arranged separation membrane layers may be determined by conventional thickness meters (e.g., J50C by Käfer, Germany, or a thickness meter by Hahn&Kolb).

According to the present invention, in the filtration system, the normalized permeability $P_{norm}$ of the one or more sequentially arranged separation membrane layers is less than a maximum normalized permeability $P_{calc}$ calculated by the following formula (2), i.e. $P_{norm} < P_{calc}$:

$$P_{calc} = P_0 + A_2 * MFP_{min} \qquad (2)$$

wherein $P_0$ is -0.079 mD and $A_2$ is 0.415 mD/$\mu$m.

In this context, "normalized" means that the permeability is normalized to the porosity of the one or more sequentially arranged separation membrane layers. The normalized permeability may be determined by the following formula as is described e.g., in Ley et al. Journal of Membrane Science 564, 2018, 543-551 (page 545):

$$P_{norm}[mD] = \left(v\left[\frac{cm^3}{cm^2 \cdot s}\right] * \mu[cP] * \frac{\Delta x[cm]}{\Delta p[atm]}\right) * \frac{1000}{porosity\,[\%]}$$

wherein $P_{norm}$ represents the normalized permeability, v represents the area-related flowrate, $\mu$ represents the viscosity of the fluid, $\Delta$x represents the thickness of the layer through which the flow passes, and $\Delta$p represents the pressure difference (cf. Darcy laws).

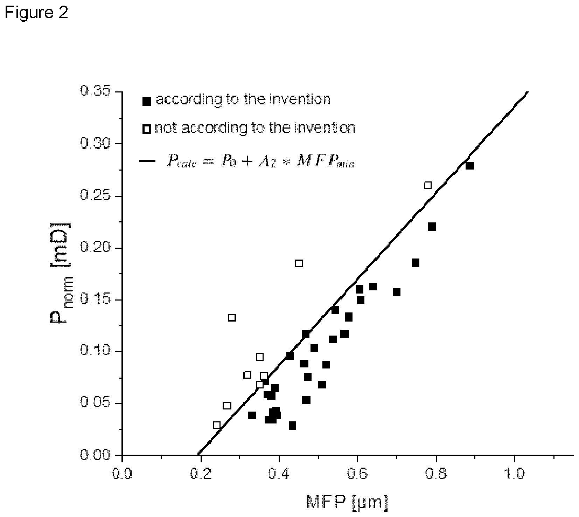

The above relationship between the normalized permeability and $MFP_{min}$ is shown in Figure 2.

A normalized permeability $P_{norm}$ of less than $P_{calc}$ according to formula (2) is a clear indicator for one or more sequentially arranged separation membrane layers having a high degree of symmetry. That is, if the normalized permeability is more than $P_{calc}$, various significantly differing pore sizes are present in the one or more sequentially arranged separation membrane layers, and the larger pores increase the permeability. In other words, $P_{calc}$ is the calculated permeability for one or more sequentially arranged separation membrane layers in a case where the pore size distribution within the one or more sequentially arranged separation membrane layers is narrow (at best: constant) in the thickness direction of the membrane layers and also in the direction orthogonal to the thickness direction, i.e., the one or more sequentially arranged separation membrane layers are symmetrical.

In formula (2), $P_0$ is preferably -0.097 mD and $A_2$ is 0.415 mD/$\mu$m and more preferably $P_0$ is -0.115 mD and $A_2$ is 0.415 mD/$\mu$m.

Due to the specific combination of minimal MFPs of the one or more sequentially arranged separation membrane layers with a low variation between the MFP(s) of the one or more sequentially arranged separation membrane layers and the relationships between $MFP_{min}$ and the total height as well as the normalized permeability as characterized by formulas (1) and (2), the filtration system according to the present invention achieves a high yield of target particles having a hydrodynamic diameter of at most 400 nm and sterile filtration at the same time although the target particles are in the same size dimension as bacteria.

In a preferred embodiment of the filtration system of the present invention, in each porous separation membrane, a ratio of the diameter of the largest pore in the porous separation membrane $d_{max}$ to the mean flow pore diameter MFP of the porous separation membrane, $d_{max}$/MFP, is from 1.0 to 1.3. The value $d_{max}$/MFP reflects the pore size distribution of each porous separation membrane (i.e., the width thereof). That is, $d_{max}$/MFP of 1.0 corresponds to a perfectly narrow pore size distribution, wherein each pore has the same size. On the other hand, a large $d_{max}$/MFP value is obtained for a membrane in which the pore sizes vary greatly.

Typically, a $d_{max}$/MFP value of 1.0 to 1.3 is obtained for phase inversion membranes. Therefore, the porous separation membranes comprised in the filtration system of the present invention are preferably phase inversion membranes.

In this context, the term "phase inversion membrane" relates to membranes that are formed by a phase inversion process. That is, such process typically includes a phase segregation which is often combined with solvent evaporation. I.e., the pore structure results from a segregation process, i.e., a liquid polymer solution is applied as a thin layer onto a carrier and in a subsequent evaporation process the solvent (mixture) of the polymer is removed. Due to evaporation, the polymer becomes insoluble in the resulting solvent-reduced mixture leading to a segregation into a polymer-rich and a polymer-diminished phase. During continued evaporation, the polymer-rich phase solidifies while the polymer-diminished phase disappears due to evaporation, the process yielding a porous membrane.

Within the above-described narrow pore size distribution, i.e., $d_{max}$/MFP being from 1.0 to 1.3, it is advantageously possible to determine the MFP instead of a pore diameter distribution, since the MFP corresponds to a good estimate for the general pore size of the membrane. In this context, the MFP can be determined easily compared to the largest pore diameter $d_{max}$.

In view of simplification of measurement and observation of each membrane, $d_{max}$/MFP is preferably from 1.05 to 1.25 and more preferably from 1.08 to 1.22.

In this context, the largest pore diameter $d_{max}$ may be determined by the following method. Herein, for determining pore sizes which are equal to or more than 0.1 $\mu$m, capillary flow porometry (cf. EP 4 299 165 A1 and A. Shrestha, "Characterization of porous membranes via porometry", 2012, Mechanical Engineering Graduate Theses & Dissertations, Paper 38, University of Colorado at Boulder) is applied.

Moreover, in a preferred embodiment of the filtration system of the present invention, the porosity of the one or more sequentially arranged separation membrane layers is 70% or more. More preferably, the porosity is 75% or more and even more preferably the porosity is 80% or more. Providing separation membrane layers having the above porosity achieves a high flowrate and throughput in size exclusion chromatography when the herein described filtration system is used. In particular, the separation membrane layers are provided with more possible flowpaths and, thus, the material is less prone to blocking. Therefore, separation membrane layers having the above minimum porosity can be used for longer durations before blocking and the yield increases since longer applicability achieves a more advantageous (i.e., smaller) ratio of dead volume and unspecific adsorption in relation to the amount of filtered fluid. On the other hand, in view of mechanical stability of the membrane layers, which decreases at very high porosities, the porosity is preferably 95% or less and more preferably 92% or less.

In this context, the porosity of the one or more sequentially arranged separation membrane layers may be determined using the dimensions of the membrane (i.e., the volume of the complete membrane), the weight of the membrane, and the density of the membrane material, all of which are measured for a dry membrane. Thus, by simple calculation, the volume of membrane material in the membrane can be determined with the remainder being air. Subsequently, the porosity is determined by the following formula:

$$porosity = \frac{V_{pores}}{V_{complete\ membrane}} = \frac{V_{complete\ membrane} - V_{membrane\ material}}{V_{complete\ membrane}}$$

with

$$V_{complete\ membrane} = V_{pores} + V_{membrane\ material}$$

Further, in a specific embodiment of the filtration system of the present invention, the system comprises at least two separation membrane layers. That is, in such case, the total height of the one or more sequentially arranged separation membrane layers depending on $MFP_{min}$ as defined in formula (1) is realized by using at least two separation membrane layers.

Preferably, said at least two separation membrane layers have the same MFP. If said at least two separation membrane layers have the same MFP, the layers exhibit an exceptionally high degree of symmetry resulting in high sterility.

Further, it is preferred that said at least two separation membrane layers are in direct contact with each other. For example, they may be stacked on top of each other. That is, such arrangement ensures that there is no space between the membrane layers in which the target molecules may be mixed again with small numbers of bacteria that pass the first membrane layer. Thus, such arrangement achieves a higher degree of sterility.

In a further preferred embodiment of the filtration system according to the present invention, each of the porous separation membranes comprises at least one selected from cellulose acetate, regenerated cellulose, crosslinked cellulose, agarose, polyethersulfone, polyvinylidene fluoride, polytetrafluoroethylene, polysulfone, polyamide, polypropylene and polyethylene. Thus, the at least one separation membrane layer preferably is a phase inversion membrane comprising at least one selected from the above materials. More preferably, each of the porous separation membranes comprises at least one of cellulose acetate, regenerated cellulose, crosslinked cellulose, agarose, and polyethersulfone.

Moreover, in a specific embodiment of the filtration system of the present invention, each of the separation membranes of the one or more separation membrane layers has a mean flow pore diameter MFP of from 0.45 $\mu$m to 0.60 $\mu$m, and the total height $h_{tot}$ of the one or more separation membrane layers is at least 300 $\mu$m. Said specific embodiment is optimized for filtering particles having a hydrodynamic diameter of about 200 nm.

Even further, in another specific embodiment of the filtration system of the present invention, each of the separation membranes of the one or more separation membrane layers has a mean flow pore diameter MFP of more than 0.60 $\mu$m and equal to or less than 0.70 $\mu$m, and the total height $h_{tot}$ of the one or more separation membrane layers is at least 450 $\mu$m. Said specific embodiment is optimized for filtering particles having a hydrodynamic diameter of about 300 nm.

The preparation of porous separation membranes as described above can be carried out by conventional methods known in the art and is well known to a person skilled in the art (e.g., from L. J. Zeman et al., "Microfiltration and ultrafiltration principles and applications", Marcel Dekker 1996, "Part I", "Chapter 3.1"; DE 103 26 741 A1; and DE 34 47 625 A1).

According to the present invention, there is further provided a method for sterile filtration of particles having a hydrodynamic diameter of at most 400 nm, the method comprising the steps of:

(a) providing a nonsterile suspension of the particles,
(b) contacting the nonsterile suspension of the particles with a filtration system comprising one or more sequentially arranged separation membrane layers each comprising a porous separation membrane, thereby removing bacteria from the nonsterile suspension of particles to provide a sterile suspension of the particles,

wherein each of the porous separation membranes of the one or more separation membrane layers of the filtration system has a mean flow pore diameter MFP,
wherein the MFP of each of the porous separation membranes is at least 0.45 $\mu$m,
wherein the MFP of the porous separation membrane having the lowest MFP is defined as $MFP_{min}$,
wherein the MFP of each of the porous separation membranes other than the porous separation membrane having $MFP_{min}$ is at most 20% larger than $MFP_{min}$,
wherein the total height $h_{tot}$ of the one or more sequentially arranged separation membrane layers is characterized by the following formula (1):

$$h_{max} \geq h_{tot} \geq h_0 + A_1 * e^{t_1*(MFP_{min})^2} \qquad (1)$$

wherein $h_{max}$ is 1.5 mm, $h_0$ is 32 $\mu$m, $A_1$ is 12 $\mu$m, and $t_1$ is 7.5 $\mu$m$^{-2}$; and
wherein the normalized permeability $P_{norm}$ of the one or more sequentially arranged separation membrane layers is less than a maximum normalized permeability $P_{calc}$ calculated by the following formula (2):

$$P_{calc} = P_0 + A_2 * MFP_{min} \qquad (2)$$

wherein $P_0$ is -0.079 mD and $A_2$ is 0.415 mD/μm.

As used in the method of the present invention, a suspension is called "sterile" if the model bacterium *Brevundimonas diminuta* has been removed with an LRV of at least 7.0.

In the present invention, the method for sterile filtration of particles having a hydrodynamic diameter of at most 400 nm comprises at least steps (a) and (b).

Here, step (a) of providing a nonsterile suspension of the particles is not particularly limited and any known provision of a nonsterile suspension of particles may be conducted. In the specific case of cell and gene therapy, the nonsterile suspension of particles may e.g., be a fluid comprising the target molecules as well as additives such as buffers, stabilizers, salts, sugars, etc. as it is typically the case in final fill applications during provision of the target molecules.

Further, step (b) of contacting the nonsterile suspension of the particles with a filtration system as described above is not particularly limited and any known contacting with the filtration system may be conducted. For example, in a specific embodiment of the above method, step (b) is a normal flow filtration, where the process fluid is passed through the membrane. Alternatively, in another specific embodiment of the above method, step (b) is a tangential flow filtration, where the process fluid is passed over the membrane and the fluid penetrates the membrane tangentially.

Even further, with reference to the filtration system which is used in the above method for sterile filtration, the filtration system is characterized by comprising one or more sequentially arranged separation membrane layers each comprising a porous separation membrane, thereby removing bacteria from the nonsterile suspension of particles to provide a sterile suspension of the particles, wherein each of the porous separation membranes of the one or more separation membrane layers of the filtration system has a mean flow pore diameter MFP, wherein the MFP of each of the porous separation membranes is at least 0.45 μm, wherein the MFP of the porous separation membrane having the lowest MFP is defined as $MFP_{min}$, wherein the MFP of each of the porous separation membranes other than the porous separation membrane having $MFP_{min}$ is at most 20% larger than $MFP_{min}$, wherein the total height $h_{tot}$ of the one or more sequentially arranged separation membrane layers is characterized by the following formula (1):

$$h_{max} \geq h_{tot} \geq h_0 + A_1 * e^{t_1*(MFP_{min})^2} \qquad (1)$$

wherein $h_{max}$ is 1.5 mm, $h_0$ is 32 μm, $A_1$ is 12 μm, and $t_1$ is 7.5 μm$^{-2}$; and wherein the normalized permeability $P_{norm}$ of the one or more sequentially arranged separation membrane layers is less than a maximum normalized permeability $P_{calc}$ calculated by the following formula (2):

$$P_{calc} = P_0 + A_2 * MFP_{min} \qquad (2)$$

wherein $P_0$ is -0.079 mD and $A_2$ is 0.415 mD/μm.

In this context, the features and (preferred) embodiments described above in the context of the filtration system of the present invention also apply for the method for sterile filtration of particles having a hydrodynamic diameter of at most 400 nm of the present invention.

In a preferred embodiment of the method according to the present invention, the particles having a hydrodynamic diameter of at most 400 nm are biomolecules selected from the group consisting of viruses, virus-like particles, liposomes, exosomes, lipid nanoparticles, and lipoplexes. Said biomolecules fall under the definition of particles having a hydrodynamic diameter of at most 400 nm as described above and are difficult to be sterile filtered due to their specific sizes. Particular examples of such biomolecules are adeno-associated viruses (AAVs) having a hydrodynamic diameter of about 25 nm, adeno viruses having a hydrodynamic diameter of about 75 nm, lentiviruses having a hydrodynamic diameter of about 100 nm, and conventional vaccines and large viruses having a hydrodynamic diameter of about 200 nm.

According to the present invention, there is further provided a use of the filtration system described above for sterile filtration of particles having a hydrodynamic diameter of at most 400 nm.

In this context, the features and (preferred) embodiments described above in the context of the filtration system of the present invention also apply for the use of said filtration system for sterile filtration of particles having a hydrodynamic diameter of at most 400 nm of the present invention.

Further, it is preferred that the above-described target biomolecules are filtered using the filtration system. That is, it is preferred that the particles having a hydrodynamic diameter of at most 400 nm are biomolecules selected from the group consisting of viruses, virus-like particles, liposomes, exosomes, lipid nanoparticles, and lipoplexes including the specific and preferred examples of such biomolecules described above in the context of the method for sterile filtration.

By providing the above-described filtration system for sterile filtration of particles having a hydrodynamic diameter of at most 400 nm as well as the above-described method for sterile filtration of particles having a hydrodynamic diameter of at most 400 nm and the above-described use of the filtration system for sterile filtration of particles having a hydrodynamic diameter of at most 400 nm, the filtration/purification of large particles as target molecules with a high yield (e.g., a transmission of molecules of at least 50% of the feed) can be achieved while also maintaining sterility during filtration.

The Figures show:

Figure 1 shows the relationship of the total height $h_{tot}$ and $MFP_{min}$ including the curve corresponding to formula (1).

Figure 2 shows the relationship of the normalized permeability $P_{norm}$ and $MFP_{min}$ including the curve corresponding to formula (2).

Figure 3 shows the particle yield of exemplary membranes depending on their MFP and using latex particles of different hydrodynamic diameters.

The present invention will be further illustrated in the following examples without being limited thereto.

**Examples**

The above-described method and filtration system are further illustrated using inverse liquid chromatography. That is, the apparatus used herein is a conventional apparatus for inverse liquid chromatography including a piston pump, capillary connections, a membrane sample holder that can be controlled sequentially, and a UV detector.

Test filtrations were conducted using latex particles having different hydrodynamic diameters as a model system for simulating filtrations of e.g., small viruses (hydrodynamic diameter of about 100 nm) to large exosomes (hydrodynamic diameter of about 300 nm). The filtrations were conducted using the constant flowrates as shown in Tables 2 and 3 while recording the pressure. That is, sample membranes were mounted into the membrane sample holder and 15 mL of latex particle feed suspension were brought into contact with the membrane samples.

As samples, symmetrical cellulose acetate (Example 1) and symmetrical polyethersulfone (Example 2) membranes were used, all of which fulfil the requirements of claim 1 (cf. Table 2). Similarly, in Table 3, Comparative Examples are shown which differ in their properties from the requirements of claim 1. In this context, the Comparative Examples differ from the inventive Examples by e.g., their MFP, which is below 0.45 $\mu$m, their total height $h_{tot}$, which does not fulfil formula (1), or their normalized permeability $P_{norm}$, which does not fulfil formula (2).

After filtration, the particle yields (in %) were measured using the UV signal of the latex particles in dependence of the volume of filtered suspension, i.e., the particle yield represents the proportion of target particles that are let through the filtration system. In this context, a particle yield of 70% or more was classified as very good (++), a particle yield of 35% or more and less than 70% was classified as good (+), and a particle yield of less than 35% was classified as bad (-).

Further, the sterility of the conducted process was tested using standard bacterial challenge test ASTM F838-20. That is, the model bacterium *Brevundimonas Diminuta* (*B. diminuta*) was filtered at a pressure of 1 bar and the logarithmic reduction value (LRV) for each filtration was determined, i.e., the LRV is defined as the quotient of the logarithm of the total number "$n_{feed}$" of bacteria (here: *B diminuta* cells) in a process solution ("feed solution") before passage through a filter and the sum ($1 + n_{filtrate}$), wherein "$n_{filtrate}$" is the total number of bacterial colonies grown on a culture medium:

$$LRV = \frac{\log_{10}(n_{feed})}{1 + n_{filtrate}}$$

In this context, a process/feed solution is used in which the number of bacteria is set to $1 \times 10^7$ per square centimeter of the surface of the filtration system.

As used herein, an LRV of less than 7.0 was classified as nonsterile, i.e., a significant portion of *B. diminuta* was let through the filtration system, and an LRV of at least 7.0 was classified as sterile, i.e., the bacterium was held back and removed.

Results

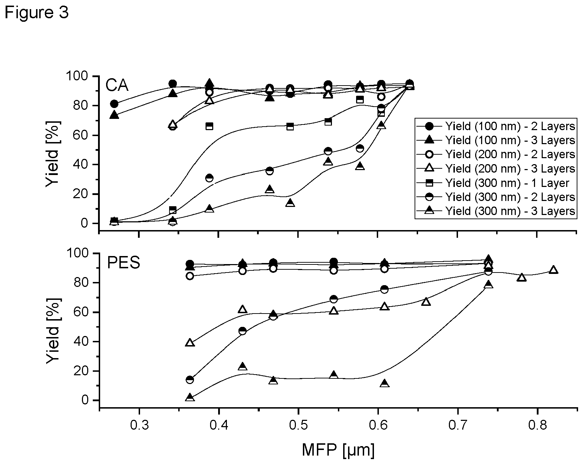

The particle yields of Examples 1 and 2 (including Comparative Examples having a low MFP) for different MFPs are shown in Figure 3 and are qualitatively assessed in the following Table 1.

Table 1. Particle yields of filtrations of various latex particles.

| MFP / μm | hydrodynamic diameter of latex particles / nm | | |
|---|---|---|---|
| | 100 | 200 | 300 |
| < 0.45 | ++ | + | - |
| 0.45 - 0.60 | ++ | ++ | + |
| 0.60 - 0.70 | ++ | ++ | ++ |

Further, the LRVs and particle yields of Examples 1 and 2 and the Comparative Examples for different MFPs are shown in Tables 2 and 3.

Table 2

| | | MFP | $P_{norm}$ | $P_{calc}$ | porosity | flowrate | $h_{tot}$ | LRV | Yield [%] | | |
|---|---|---|---|---|---|---|---|---|---|---|---|
| Examples | Material | μm | mD | mD | % | mL/(min*cm$^2$*bar) | μm | | 100 nm | 200 nm | 300 nm |
| Example 1 | CA | 0.46 | 0.09 | 0.11 | 80 | 11.13 | 376 | ≥7 | 90 | 92 | 36 |
| | CA | 0.46 | 0.09 | 0.11 | 80 | 7.42 | 564 | ≥7 | 85 | 91 | 23 |
| | CA | 0.54 | 0.11 | 0.14 | 80 | 13.87 | 380 | ≥7 | 95 | 92 | 49 |
| | CA | 0.54 | 0.11 | 0.14 | 80 | 9.24 | 570 | ≥7 | 88 | 87 | 42 |
| | CA | 0.58 | 0.13 | 0.16 | 80 | 16.42 | 384 | ≥7 | 93 | 92 | 51 |
| | CA | 0.58 | 0.13 | 0.16 | 80 | 10.95 | 576 | ≥7 | 93 | 91 | 38 |
| | CA | 0.60 | 0.16 | 0.17 | 80 | 19.68 | 384 | ≥7 | 95 | 86 | 78 |
| | CA | 0.60 | 0.16 | 0.17 | 80 | 13.12 | 576 | ≥7 | 94 | 92 | 66 |
| | CA | 0.64 | 0.16 | 0.19 | 80 | 13.12 | 585 | ≥7 | 94 | 93 | 94 |
| Example 2 | PES | 0.47 | 0.12 | 0.12 | 78 | 17.91 | 300 | ≥7 | 94 | 90 | 58 |
| | PES | 0.47 | 0.12 | 0.12 | 78 | 11.94 | 450 | ≥7 | 93 | 58 | 13 |
| | PES | 0.54 | 0.14 | 0.15 | 78 | 21.52 | 300 | ≥7 | 94 | 88 | 70 |
| | PES | 0.54 | 0.14 | 0.15 | 78 | 14.35 | 450 | ≥7 | 92 | 61 | 17 |
| | PES | 0.61 | 0.15 | 0.17 | 78 | 22.98 | 300 | ≥7 | 93 | 89 | 76 |
| | PES | 0.61 | 0.15 | 0.17 | 78 | 15.32 | 450 | ≥7 | 93 | 63 | 11 |

Table 3

| | | MFP | $P_{norm}$ | $P_{calc}$ | porosity | flowrate | $h_{tot}$ | LRV | Yield [%] | | |
|---|---|---|---|---|---|---|---|---|---|---|---|
| Comparative Examples | Material | μm | mD | mD | % | ml/(min*cm2*bar) | μm | | 100 nm | 200 nm | 300 nm |
| Millipore XL | PES | 0.27 | 0.07 | 0.03 | 80 | 25.63 | 134 | ≥7 | - | - | - |
| GVS PVDF | PVDF | 0.28 | 0.02 | 0.04 | 80 | 5.50 | 150 | ≥7 | - | - | - |
| MicroPES 2F (Membrana) | PES | 0.37 | 0.09 | 0.08 | 80 | 32.99 | 125 | ≥7 | - | - | - |
| DuraPES 200 (3M) | PES | 0.24 | 0.11 | 0.02 | 80 | 40.84 | 132 | ≥7 | - | - | - |
| OE66 (Cytiva) | CA | 0.38 | 0.06 | 0.08 | 80 | 20.51 | 135 | ≥7 | 92 | 50 | 30 |
| Durapore (Millipore) | PVDF | 0.38 | 0.04 | 0.08 | 80 | 12.60 | 150 | ≥7 | - | 30* | - |

(continued)

| Comparative Examples | Material | MFP | P_norm | P_calc | porosity | flowrate | h_tot | LRV | Yield [%] | | |
|---|---|---|---|---|---|---|---|---|---|---|---|
| | | | | | | ml/(min *cm2 *bar) | | | 100 nm | 200 nm | 300 nm |
| | | $\mu$m | mD | mD | % | | $\mu$m | | | | |
| Sartopore (Sartorius) | PES | 0.36 | 0.07 | 0.07 | 78 | 21.99 | 150 | $\geq 7$ | 95 | 47 | 38 |

The particle yields were determined as described in Neil Taylor, Wanli Ma, Adam Kristopeit, Sheng-Ching Wang, Andrew L Zydney Biotechnol Bioeng. 2021, 118(1):106-115: "Evaluation of a sterile filtration process for viral vaccines using a model nanoparticle suspension".

In particular, the determination of latex bead yield with 100, 200 & 300 nm PS latex particles is as follows: A membrane sample (circular disc with d = 6 mm) was placed in a sample holder and flushed with Tris-buffer (pH 7) using a filtration apparatus by Knauer. After flushing, the sample was flowed through by a model particle suspension (100, 200 or 300 nm latex particles) in constant flow. The breakthrough curve was detected by the solution's UV absorption signal at 260 nm and the Latex bead yield was derived from the UV Signal making use of the linear relationship between concentration and intensity.

As can be seen, filtration systems fulfilling the features of claim 1 result in recovering the particles to be filtered with a high yield while also maintaining sterility of the filtration as shown by LRVs of at least 7.0. In contrast, the filtration systems according to the Comparative Examples fail to meet both objects of a high particle yield and sterility at the same time.

**Claims**

1.   A filtration system for sterile filtration of particles having a hydrodynamic diameter of at most 400 nm,

the system comprising one or more sequentially arranged separation membrane layers each comprising a porous separation membrane;
wherein each of the porous separation membranes of the one or more separation membrane layers has a mean flow pore diameter MFP,
wherein the MFP of each of the porous separation membranes is at least 0.45 $\mu$m,
wherein the MFP of the porous separation membrane having the lowest MFP is defined as $MFP_{min}$,
wherein the MFP of each of the porous separation membranes other than the porous separation membrane having $MFP_{min}$ is at most 20% larger than $MFP_{min}$,
wherein the total height $h_{tot}$ of the one or more sequentially arranged separation membrane layers is **characterized by** the following formula (1):

$$h_{max} \geq h_{tot} \geq h_0 + A_1 * e^{t_1*(MFP_{min})^2} \qquad (1)$$

wherein

$h_{max}$ is 1.5 mm,
$h_0$ is 32 $\mu$m,
$A_1$ is 12 $\mu$m, and
$t_1$ is 7.5 $\mu$m$^{-2}$; and

wherein the normalized permeability $P_{norm}$ of the one or more sequentially arranged separation membrane layers is less than a maximum normalized permeability $P_{calc}$ calculated by the following formula (2):

$$P_{calc} = P_0 + A_2 * MFP_{min} \qquad (2)$$

wherein $P_0$ is -0.079 mD and $A_2$ is 0.415 mD/$\mu$m.

2.   The filtration system according to claim 1, wherein in each porous separation membrane, a ratio of the diameter of the largest pore in the porous separation membrane $d_{max}$ to the mean flow pore diameter MFP of the porous separation membrane, $d_{max}$/MFP, is from 1.0 to 1.3.

3. The filtration system according to claim 1 or 2, wherein the system comprises at least two separation membrane layers.

4. The filtration system according to claim 3, wherein the separation membrane layers are in direct contact with each other.

5. The filtration system according to any one of claims 1 to 4, wherein each of the porous separation membranes comprises at least one selected from cellulose acetate, regenerated cellulose, crosslinked cellulose, agarose, polyethersulfone, polyvinylidene fluoride, polytetrafluoroethylene, polysulfone, polyamide, polypropylene and polyethylene.

6. The filtration system according to any one of claims 1 to 5, wherein in formula (1), $h_0$ is 55 $\mu$m, $A_1$ is 16 $\mu$m, and $t_1$ is 8.5 $\mu$m$^{-2}$.

7. The filtration system according to any one of claims 1 to 6, wherein in formula (2), $P_0$ is -0.115 mD and $A_2$ is 0.415 mD/$\mu$m.

8. The filtration system according to any one of claims 1 to 7, wherein each of the porous separation membranes of the one or more separation membrane layers has a mean flow pore diameter MFP of from 0.45 $\mu$m to 0.60 $\mu$m, and the total height $h_{tot}$ of the one or more separation membrane layers is at least 300 $\mu$m.

9. The filtration system according to any one of claims 1 to 7, wherein each of the porous separation membranes of the one or more separation membrane layers has a mean flow pore diameter MFP of more than 0.60 $\mu$m and equal to or less than 0.70 $\mu$m, and the total height $h_{tot}$ of the one or more separation membrane layers is at least 450 $\mu$m.

10. The filtration system according to any one of claims 1 to 9, wherein the one or more sequentially arranged separation membrane layers have a protein binding capacity of bovine serum albumine per volume unit of the filtration system of 3.0 mg/mL or less at a pH of 3 to 10.

11. A method for sterile filtration of particles having a hydrodynamic diameter of at most 400 nm, the method comprising the steps of:

    (a) providing a nonsterile suspension of the particles,
    (b) contacting the nonsterile suspension of the particles with a filtration system comprising one or more sequentially arranged separation membrane layers each comprising a porous separation membrane, thereby removing bacteria from the nonsterile suspension of particles to provide a sterile suspension of the particles,
    wherein each of the porous separation membranes of the one or more separation membrane layers of the filtration system has a mean flow pore diameter MFP,
    wherein the MFP of each of the porous separation membranes is at least 0.45 $\mu$m,
    wherein the MFP of the porous separation membrane having the lowest MFP is defined as MFP$_{min}$,
    wherein the MFP of each of the porous separation membranes other than the porous separation membrane having MFP$_{min}$ is at most 20% larger than MFP$_{min}$,
    wherein the total height $h_{tot}$ of the one or more sequentially arranged separation membrane layers is **characterized by** the following formula (1):

$$h_{max} \geq h_{tot} \geq h_0 + A_1 * e^{t_1 * (MFP_{min})^2} \qquad (1)$$

    wherein

    $h_{max}$ is 1.5 mm,
    $h_0$ is 32 $\mu$m,
    $A_1$ is 12 $\mu$m, and
    $t_1$ is 7.5 $\mu$m$^{-2}$; and

wherein the normalized permeability $P_{norm}$ of the one or more sequentially arranged separation membrane layers is less than a maximum normalized permeability $P_{calc}$ calculated by the following formula (2):

$$P_{calc} = P_0 + A_2 * MFP_{min} \qquad (2)$$

wherein $P_0$ is -0.079 mD and $A_2$ is 0.415 mD/μm.

12. The method for sterile filtration of particles according to claim 11, wherein the particles having a hydrodynamic diameter of at most 400 nm are biomolecules selected from the group consisting of viruses, virus-like particles, liposomes, exosomes, lipid nanoparticles, and lipoplexes.

13. The method for sterile filtration of particles according to claim 11 or 12, wherein the one or more sequentially arranged separation membrane layers have a protein binding capacity of bovine serum albumine (BSA) per volume unit of the filtration system of 3.0 mg/mL or less at a pH of 3 to 10.

14. Use of the system according to any one of claims 1 to 10 for sterile filtration of particles having a hydrodynamic diameter of at most 400 nm.

15. The use according to claim 14, wherein the particles having a hydrodynamic diameter of at most 400 nm are biomolecules selected from the group consisting of viruses, virus-like particles, liposomes, exosomes, lipid nano-particles, and lipoplexes.

Figure 1

Figure 2

Figure 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOUROUZIDIS-MOUROUZIS S A ET AL: "Whey protein fouling of microfiltration ceramic membranes-Pressure effects", JOURNAL OF MEMBRANE SCIENCE, ELSEVIER BV, NL, vol. 282, no. 1-2, 5 October 2006 (2006-10-05), pages 124-132, XP024931804, ISSN: 0376-7388, DOI: 10.1016/J.MEMSCI.2006.05.012 [retrieved on 2006-10-05] * "introduction"; figure 2 * | 1-4,6,7, 9-15 | INV. B01D61/14 B01D61/18 |
| X | JP H07 124450 A (FUJI PHOTO FILM CO LTD) 16 May 1995 (1995-05-16) * paragraph [0004] - paragraph [0013]; claim 1 * | 1-15 | |
| X | CN 105 999 239 A (SHANDONG SBOND PHARMACEUTICAL CO LTD) 12 October 2016 (2016-10-12) * claims 1-4; examples 1-5 * | 1-8,10 | TECHNICAL FIELDS SEARCHED (IPC) B01D |
| X | KR 2014 0072745 A (WOONGJIN CHEMICAL CO LTD [KR]) 13 June 2014 (2014-06-13) * example 1 * | 1-4,6,7, 10,11, 13,14 | |

The present search report has been drawn up for all claims

| Place of search | Date of completion of the search | Examiner |
|---|---|---|
| Munich | 14 October 2024 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 17 7670

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | | Publication date | Patent family member(s) | Publication date |
|---|---|---|---|---|
| JP H07124450 | A | 16-05-1995 | NONE | |
| CN 105999239 | A | 12-10-2016 | NONE | |
| KR 20140072745 | A | 13-06-2014 | NONE | |

For more details about this annex : see Official Journal of the European Patent Office, No. 12/82

## REFERENCES CITED IN THE DESCRIPTION

### Patent documents cited in the description

- EP 4299165 A1
- DE 10326741 A1
- DE 3447625 A1

### Non-patent literature cited in the description

- **TAYLOR, N. et al.** *J. Membr. Sci.*, 2021, vol. 635, 119436
- Characterization of porous membranes via porometry. **A. SHRESTHA**. Mechanical Engineering Graduate Theses & Dissertations. University of Colorado at Boulder, 2012
- **LEY et al.** *Journal of Membrane Science*, 2018, vol. 564, 543-551
- **L. J. ZEMAN et al.** Microfiltration and ultrafiltration principles and applications. Marcel Dekker, 1996
- **NEIL TAYLOR** ; **WANLI MA** ; **ADAM KRISTOPEIT** ; **SHENG-CHING WANG** ; **ANDREW L ZYDNEY**. Evaluation of a sterile filtration process for viral vaccines using a model nanoparticle suspension. *Biotechnol Bioeng.*, 2021, vol. 118 (1), 106-115